# EUROPEAN PATENT APPLICATION

(11) **EP 4 765 891 A1**
(43) Date of publication of application: **24.06.2026**
(21) Application number: 24864074.0
(22) Date of filing: 06.05.2024
(51) Int. Cl.: H04W 4/08

(54) **COOPERATIVE GROUP INTERACTION METHOD, NETWORK DEVICE, AND STORAGE MEDIUM**

(30) Priority: 11.09.2023 CN 202311168915
(71) Applicant: ZTE Corporation, Shenzhen, Guangdong 518057 (CN)
(72) Inventor: YUAN, Liquan, Shenzhen, Guangdong 518057 (CN); LI, Yun, Shenzhen, Guangdong 518057 (CN)
(74) Representative: Aipex B.V.
(86) International application number: PCT/CN2024/091142
(87) International publication number: WO 2025/055349

(57) **Abstract**

Provided are a cooperative group interaction method, a network device, and a storage medium. The method includes: interacting with a second network device to form a cooperative group; in a case where a first network device is a master network device, generating cooperative group information, where the cooperative group information includes multicast key information and group identifier information; and sending the cooperative group information to the second network device.

## Description

### TECHNICAL FIELD

The present application relates to the field of network communications, for example, a cooperative group interaction method, a network device, and a storage medium.

### BACKGROUND

Frame protection between access points (APs) is an important means to improve the overall system stability. Inter-AP frame protection includes unicast frame protection and multicast frame protection among APs. For unicast frame protection, pairwise negotiation of unicast keys between APs is sufficient. Multicast frame protection operates within an AP cooperative group, that is, APs within one cooperative group share a set of multicast keys to encrypt and decrypt transmitted multicast information. Each AP cooperative group requires one master AP to maintain and distribute the multicast keys. However, the current frame protection mechanism within cooperative groups is still not fully developed. For example, if the master AP exits from the cooperative group due to reasons such as restart caused by abnormal operation, unexpected power loss, and the like, the master AP cannot notify other members and dissolve the group; an AP which is newly joined the cooperative group may be unable to communicate directly with the master AP if the AP is far away from the master AP; if two adjacent APs join different cooperative groups, the two APs cannot directly identify the cooperative group information of multicast frames or distinguish the cooperative group-related key information used in each multicast frame. The reliability of AP cooperation needs to be improved.

### SUMMARY

The present application provides a cooperative group interaction method, a network device, and a storage medium.

An embodiment of the present application provides a cooperative group interaction method. The method is applied to a first network device and includes the following.

A second network device is interacted with to form a cooperative group.

In a case where the first network device is a master network device, cooperative group information is generated, where the cooperative group information includes multicast key information and group identifier information.

The cooperative group information is sent to the second network device.

An embodiment of the present application further provides a cooperative group interaction method. The method is applied to a third network device and includes the following.

An information frame of a neighbor network device is received.

A cooperative group is determined according to the information frame.

An authentication frame is sent to a network device in the cooperative group, where the authentication frame includes group identifier information of the cooperative group, and the authentication frame is used for requesting to join the cooperative group.

An embodiment of the present application further provides a network device. The network device includes a memory, a processor, and a computer program stored on the memory and runnable on the processor, where the processor performs the cooperative group interaction method described above when executing the program.

An embodiment of the present application further provides a computer-readable storage medium. The computer-readable storage medium is configured to store a computer program which, when executed by a processor, causes the processor to perform the cooperative group interaction method described above.

### BRIEF DESCRIPTION OF DRAWINGS

FIG. 1 is a flowchart of a cooperative group interaction method according to an embodiment.
FIG. 2 is a flowchart for creating a cooperative group according to an embodiment.
FIG. 3 is a flowchart of a cooperative operation among network devices according to an embodiment.
FIG. 4 is a flowchart for updating cooperative group information according to an embodiment.
FIG. 5 is a flowchart of a master network device exiting from a cooperative group according to an embodiment.
FIG. 6 is a flowchart of a slave network device exiting from a cooperative group according to an embodiment.
FIG. 7 is a flowchart of a cooperative group interaction method according to an embodiment.
FIG. 8 is a flowchart for joining a cooperative group according to an embodiment.
FIG. 9 is a structure diagram of a cooperative group interaction apparatus according to an embodiment.
FIG. 10 is a structure diagram of another cooperative group interaction apparatus according to an embodiment.
FIG. 11 is a schematic diagram of the hardware structure of a network device according to an embodiment.

### DETAILED DESCRIPTION

The present application will be described in conjunction with the drawings and the embodiments. It is to be understood that the embodiments set forth below are intended to explain the present application and not to limit the present application. It is to be noted that if not in collision, embodiments of the present application and features in the embodiments may be arbitrarily combined with each other. It is further to be noted that to facilitate description, only part, not all, of structures related to the present application are illustrated in the drawings.

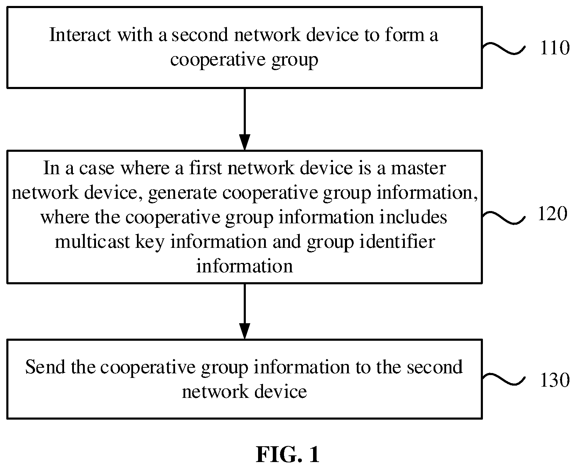

FIG. 1 is a flowchart of a cooperative group interaction method according to an embodiment. The method may be applied to a first network device. As shown in FIG. 1, the method provided in this embodiment includes step 110 to step 130.

In step 110, a second network device is interacted with to form a cooperative group.

In step 120, in a case where the first network device is a master network device, cooperative group information is generated, where the cooperative group information includes multicast key information and group identifier information.

In step 130, the cooperative group information is sent to the second network device.

In this embodiment, the network device may be an access point (AP), a station, a multi-link access point, a multi-link station, or the like. The first network device may interact with surrounding second network devices, such as by performing mutual authentication and negotiation, to create a cooperative group and determine the master network device and slave network devices. If the first network device is the master network device, cooperative group information is generated and sent to other network devices in the cooperative group. The cooperative group information includes multicast key information and group identifier information. The group identifier information may serve as the basis for interactions among network devices within the cooperative group. For example, in a case where a network device joins or exits from the cooperative group, the group identifier information may be used for notifying other devices in the cooperative group and clarifying changes in the group membership. In a case where a network device joins different cooperative groups, the group identifier information may be used for distinguishing the cooperative group information and key information in multicast frames. Therefore, the group identifier information provides a reliable guarantee for the security of frame interactions between network devices.

In an embodiment, the method further includes: in a case where the first network device is a slave network device, cooperative group information sent by the master network device is received. In an embodiment, if the first network device is the slave network device and the second network device is the master network device, the first network device may receive the cooperative group information generated and sent by the second network device.

In an embodiment, the method further includes: a first-type frame is sent to a target network device, where the first-type frame includes the group identifier information. In this embodiment, either the master network device or the slave network device in the cooperative group may send the first-type frame to the target network device, and the target network device may be a network device other than the network devices in the cooperative group so that the target network device may discover the cooperative group.

In this embodiment, the first-type frame includes at least one of: a beacon frame, a probe response frame or an action frame.

In an embodiment, in a case where the first network device joins multiple cooperative groups, the first-type frame includes group identifier information corresponding to the multiple cooperative groups.

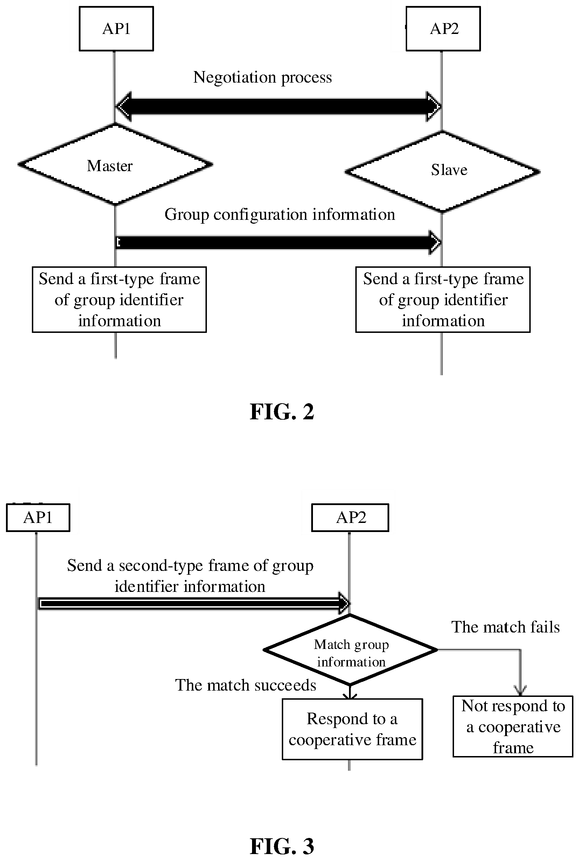

FIG. 2 is a flowchart for creating a cooperative group according to an embodiment. As shown in FIG. 2, the first network device (AP1) and the second network device (AP2) form a cooperative group through a specific authentication and negotiation mode or other frame interaction methods. AP1 becomes the master AP through negotiation, generates first cooperative group (Group 1, G1) information, and sends the G1 information to AP2 (the G1 information at least includes multicast key information (Group Key, GK) GK1 for encryption and decryption and G1 identifier information). Both AP1 and AP2 include the G1 identifier information in the unicast or multicast frames (first-type frames) that AP1 and AP2 send so that other network devices may discover the cooperative group.

In an embodiment, the cooperative group information further includes at least one of: multicast key expiration time information or member master/slave role information.

In an embodiment, in a case where the cooperative group information does not include the multicast key expiration time information, a multicast key is valid during the existence of the cooperative group. In this embodiment, if the multicast key expiration time information is not set in the cooperative group information, it is considered that the key information of the cooperative group is permanently valid on the premise that the cooperative group always exists.

In an embodiment, partial information of the cooperative group information is included in a physical frame header field or medium access control (MAC) header field of a cooperative frame.

In an embodiment, the method further includes: in a case where the first network device is the master network device, a second-type frame is encrypted according to the multicast key information, and the encrypted second-type frame is sent to a slave network device in the cooperative group, where the encrypted second-type frame carries the group identifier information, and the encrypted second-type frame is used for the slave network device to determine whether to respond to a cooperative operation.

In an embodiment, the second-type frame includes at least one of: a trigger frame between network devices, a null data packet announcement (NDPA) frame or a measurement frame.

In an embodiment, not responding to the cooperative operation includes at least one of: a cooperative frame corresponding to the second-type frame is discarded; or a sleep mode is entered within a set time period according to time information of the cooperative frame.

In an embodiment, responding to the cooperative operation includes: a cooperative frame corresponding to the second-type frame is received, the cooperative frame is decrypted according to multicast key information corresponding to the cooperative frame, and data is transmitted on a corresponding channel resource indicated in the cooperative frame, where the channel resource includes at least one of: a time-division channel resource, a frequency-division channel resource or a spatial-division channel resource.

FIG. 3 is a flowchart of a cooperative operation among network devices according to an embodiment. As shown in FIG. 3, after the first network device (AP1) acquires a channel resource or when the first network device (AP1) needs to perform a channel measurement operation, the first network device (AP1) sends a second-type frame to other members of the G1 group. After AP1 encrypts the second-type frame using the GK1 corresponding to the G1 group, AP1 carries the G1 identifier information in the encrypted second-type frame and then sends the encrypted second-type frame. The receiver matches the corresponding multicast information GK1 according to the G1 identifier information. If the match is successful, the receiver performs a corresponding cooperative response operation, and if the match fails, the receiver does not respond to the cooperative operation.

In an embodiment, in a case where the first network device joins multiple cooperative groups, the second-type frame includes one piece of specific group identifier information.

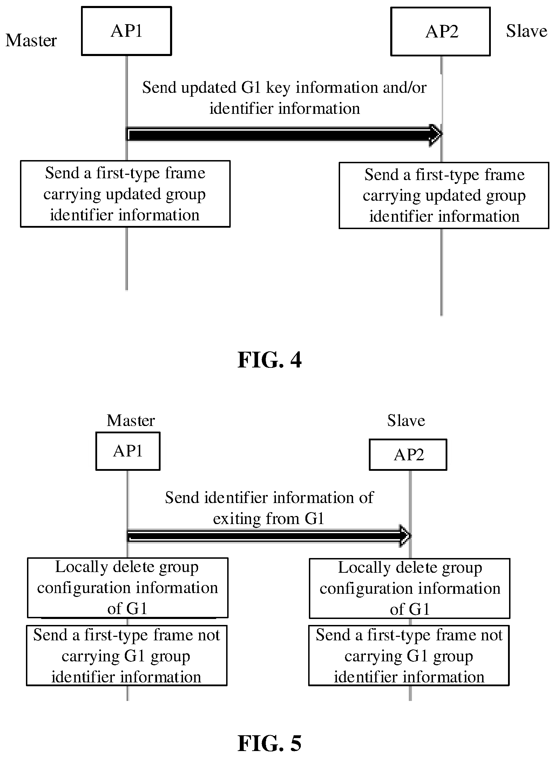

In an embodiment, the method further includes: in a case where the first network device is the master network device, new multicast key information and/or new group identifier information are sent to the slave network device in the cooperative group through an encrypted broadcast frame or an encrypted unicast frame before the multicast key information expires, and a new expiration time is set. FIG. 4 is a flowchart for updating cooperative group information according to an embodiment. As shown in FIG. 4, before the multicast key expires, the master AP sends new multicast key information and/or new group identifier information to a slave AP within the group through an encrypted broadcast frame or an encrypted unicast frame and sets a new expiration time. Upon receiving the new multicast key information and/or the new group identifier information, the slave AP updated its locally stored key information. After the group identifier information is updated, the first-type frames sent by both the master AP and the slave AP include the new group identifier information.

In an embodiment, the method further includes: in a case where the first network device is the master network device, an indication frame is sent to a neighbor network device, where the indication frame includes the group identifier information, and the indication frame is used for indicating that the first network device exits from the cooperative group; and the cooperative group information is locally deleted.

In an embodiment, the indication frame is further used for indicating that the neighbor network device exits from the cooperative group and that local cooperative group information is deleted.

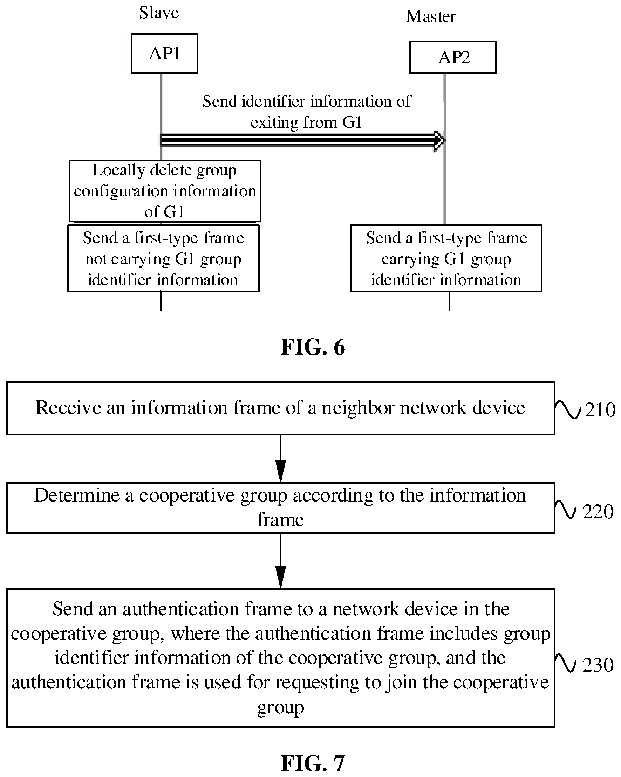

FIG. 5 is a flowchart of a master network device exiting from a cooperative group according to an embodiment. FIG. 6 is a flowchart of a slave network device exiting from a cooperative group according to an embodiment. As shown in FIGS. 5 and 6, when the first network device AP1 exits from G1 due to certain reasons, the frame sent by AP1 to the neighbor AP carries a G1 identifier and indicates operation information for exiting G1. AP1 locally deletes the group information corresponding to G1. After exiting from the G1 cooperative group, AP1 no longer carries the G1 identifier in subsequent frames sent to the neighbor AP. If AP1 is the master AP, the neighbor AP belonging to the same G1 group also exits from the G1 group, the group information corresponding to G1 is locally deleted, and subsequent first-type frames do not include the G1 identifier information. If AP1 is a slave AP, the master AP belonging to the same G1 group does not exit from the G1 group, the group information corresponding to G1 is not locally deleted, and subsequent first-type frames still include the G1 identifier information.

In an embodiment, the method further includes: in a case where the first network device is a slave network device and information that a neighbor network device joins or exits from the cooperative group is received through a unicast frame, group membership change information is sent to the master network device of the cooperative group through a unicast frame. In this embodiment, after a slave AP receives through a unicast frame the information that a neighbor slave AP joins or exits from the group, the slave AP sends a unicast frame to the master AP of the group to notify the change in group members.

In an embodiment, the method further includes: in a case where the first network device is a slave network device and new multicast key information and/or new group identifier information are received, local multicast key information and local group identifier information are updated.

The embodiments of the present application provide a method for multi-AP cooperative groups and achieve operational procedures such as creation, deletion, update, and addition of cooperative groups and the indication method for cooperative group information in different application scenarios. An AP may discover one or more AP groups by receiving frames sent by neighbor APs. After an AP joins a multi-AP cooperative group, the AP carries the corresponding group identifier information of the group in the frame that the AP sends. Each AP may simultaneously join multiple cooperative groups and carry all corresponding group identifiers. An AP may send a frame carrying a specific group identifier to indicate a request to join one or more specific cooperative groups. When an AP sends a cooperative frame, the AP carries group identifier information to indicate a corresponding cooperative group. When an AP exits from one or multiple cooperative groups, the AP sends frames to neighbor APs to notify the neighbor APs that the AP itself exits from the cooperative group.

FIG. 7 is a flowchart of a cooperative group interaction method according to an embodiment. As shown in FIG. 7, the method provided in this embodiment includes step 210 to step 230.

In step 210, an information frame of a neighbor network device is received.

In step 220, a cooperative group is determined according to the information frame.

In step 230, an authentication frame is sent to a network device in the cooperative group, where the authentication frame includes group identifier information of the cooperative group, and the authentication frame is used for requesting to join the cooperative group.

In this embodiment, a third network device may send an authentication frame carrying group identifier information to any network device in a nearby cooperative group. The network device receiving the authentication frame may be a master network device or a slave network device in the cooperative group. Requesting to join a cooperative group through an authentication frame provides a basis and reliable guarantee for the security of frame interactions between network devices.

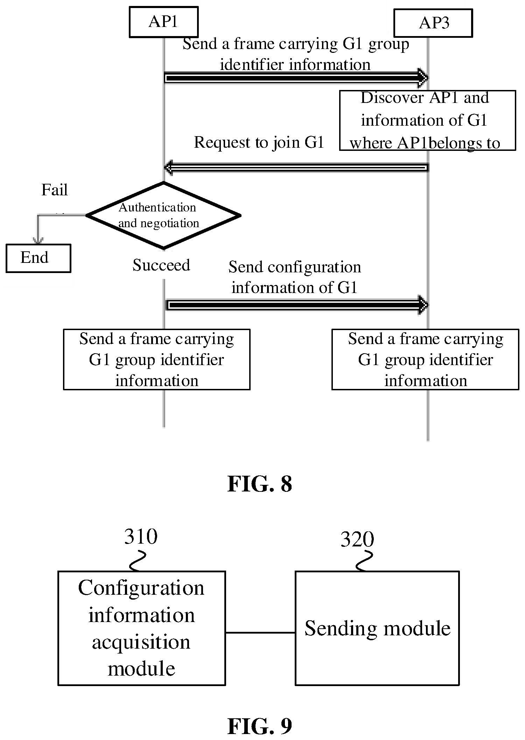

FIG. 8 is a flowchart for joining a cooperative group according to an embodiment. As shown in FIG. 8, the third network device (AP3) discovers a cooperative group G1 by receiving a first- or second-type frame from a neighbor network device (AP1). During the authentication and negotiation process between AP3 and AP1, AP3 carries the identifier of G1 to indicate a request to join this cooperative group. According to the result of the authentication and negotiation, possible outcomes include: 1) if authentication and negotiation succeed, AP1 sends the G1 information (including GK1 information) to AP3 during the negotiation process; 2) if authentication and negotiation fail, AP1 does not send the G1 information to AP3. After AP3 becomes a member of Gl, AP3 carries the group identifier information of G1 in the corresponding first-type frame.

In an embodiment, an AP may simultaneously apply to join or exit from multiple cooperative groups.

In an embodiment, the information frame includes at least one of: a first-type frame sent by a master network device in the cooperative group; or a second-type frame sent by a master network device in the cooperative group.

In an embodiment, the method further includes: in a case where the request to join the cooperative group is successful, cooperative group information sent by the master network device in the cooperative group is received, where the cooperative group information includes multicast key information and group identifier information of the cooperative group.

In an embodiment, the method further includes: in a case where the third network device joins the cooperative group, a first-type frame is sent to a target network device, where the first-type frame includes group identifier information of the cooperative group.

An embodiment of the present application further provides a cooperative group interaction apparatus. FIG. 9 is a structure diagram of a cooperative group interaction apparatus according to an embodiment. As shown in FIG. 9, the cooperative group interaction apparatus includes an interaction module 310, a generation module 320, and a sending module 330.

The interaction module 310 is configured to interact with a second network device to form a cooperative group.

The generation module 320 is configured to, in a case where a first network device is a master network device, generate cooperative group information, where the cooperative group information includes multicast key information and group identifier information.

The sending module 330 is configured to send the cooperative group information to the second network device.

Through the cooperative group interaction apparatus in this embodiment, network devices create a cooperative group through interaction, and the master network device and slave network devices are determined. The master network device may generate cooperative group information and send the cooperative group information to other network devices in the cooperative group. The cooperative group information includes multicast key information and group identifier information. The group identifier information may serve as the basis for interactions among network devices within the cooperative group, and in combination with the multicast key information, provide a reliable guarantee for the security of frame interactions between network devices.

In an embodiment, the apparatus further includes an information receiving module configured to, in a case where the first network device is a slave network device, receive cooperative group information sent by the master network device.

In an embodiment, the apparatus further includes a frame sending module configured to send a first-type frame to a target network device, where the first-type frame includes the group identifier information.

In an embodiment, the first-type frame includes at least one of: a beacon frame, a probe response frame or an action frame.

In an embodiment, in a case where the first network device joins multiple cooperative groups, the first-type frame includes group identifier information corresponding to the multiple cooperative groups.

In an embodiment, the cooperative group information further includes at least one of: multicast key expiration time information or member master/slave role information.

In an embodiment, in a case where the cooperative group information does not include the multicast key expiration time information, a multicast key is valid during the existence of the cooperative group.

In an embodiment, partial information of the cooperative group information is included in a physical frame header field or MAC header field of a cooperative frame.

In an embodiment, the apparatus further includes an encryption module and a frame sending module.

The encryption module is configured to, in a case where the first network device is the master network device, encrypt a second-type frame according to the multicast key information.

The frame sending module is configured to send the encrypted second-type frame to a slave network device in the cooperative group, where the encrypted second-type frame carries the group identifier information, and the encrypted second-type frame is used for the slave network device to determine whether to respond to a cooperative operation.

In an embodiment, the second-type frame includes at least one of: a trigger frame between network devices, an NDPA frame or a measurement frame.

In an embodiment, not responding to the cooperative operation includes at least one of: a cooperative frame corresponding to the second-type frame is discarded; or a sleep mode is entered within a set time period according to time information of the cooperative frame.

In an embodiment, responding to the cooperative operation includes: a cooperative frame corresponding to the second-type frame is received; the cooperative frame is decrypted according to multicast key information corresponding to the cooperative frame; and data is transmitted on a corresponding channel resource indicated in the cooperative frame.

The channel resource includes at least one of: a time-division channel resource, a frequency-division channel resource or a spatial-division channel resource.

In an embodiment, in a case where the first network device joins multiple cooperative groups, the second-type frame includes one piece of specific group identifier information.

In an embodiment, the apparatus further includes a new information sending module.

The new information sending module is configured to, in a case where the first network device is the master network device, send new multicast key information and/or new group identifier information to the slave network device in the cooperative group through an encrypted broadcast frame or an encrypted unicast frame before the multicast key information expires and set a new expiration time.

In an embodiment, the apparatus further includes an indication module and a deletion module.

The indication module is configured to, in a case where the first network device is the master network device, send an indication frame to a neighbor network device, where the indication frame includes the group identifier information, and the indication frame is used for indicating that the first network device exits from the cooperative group.

The deletion module is configured to locally delete the cooperative group information.

In an embodiment, the indication frame is further used for indicating that the neighbor network device exits from the cooperative group and local cooperative group information is deleted.

In an embodiment, the apparatus further includes a change information sending module.

The change information sending module is configured to, in a case where the first network device is a slave network device and information that a neighbor network device joins or exits from the cooperative group is received through a unicast frame, send group membership change information to the master network device of the cooperative group through a unicast frame.

In an embodiment, the apparatus further includes an update module.

The update module is configured to, in a case where the first network device is a slave network device and new multicast key information and/or new group identifier information are received, update local multicast key information and local group identifier information.

The cooperative group interaction apparatus provided in this embodiment and the cooperative group interaction method provided in the preceding embodiments belong to the same concept. For technical details not described in detail in this embodiment, reference may be made to any one of the preceding embodiments, and this embodiment has the same beneficial effects as the cooperative group interaction method performed.

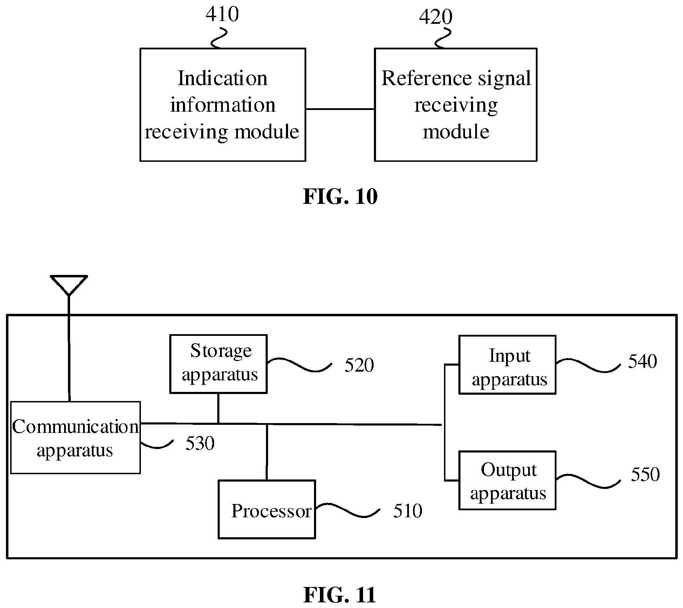

An embodiment of the present application further provides a cooperative group interaction apparatus. FIG. 10 is a structure diagram of a cooperative group interaction apparatus according to an embodiment. As shown in FIG. 10, the cooperative group interaction apparatus includes a receiving module 410, a determination module 420, and a sending module 430.

The receiving module 410 is configured to receive an information frame of a neighbor network device.

The determination module 420 is configured to determine a cooperative group according to the information frame.

The sending module 430 is configured to send an authentication frame to a network device in the cooperative group, where the authentication frame includes group identifier information of the cooperative group.

Through the cooperative group interaction apparatus in this embodiment, a third network device may send an authentication frame carrying group identifier information to a network device in a nearby cooperative group. Requesting to join a cooperative group through an authentication frame provides a basis and reliable guarantee for the security of frame interactions between network devices.

In an embodiment, the information frame includes at least one of: a first-type frame sent by a master network device in the cooperative group; or a second-type frame sent by a master network device in the cooperative group.

In an embodiment, the apparatus further includes an information receiving module.

The information receiving module is configured to, in a case where the request to join the cooperative group is successful, receive cooperative group information sent by the master network device in the cooperative group, where the cooperative group information includes multicast key information and group identifier information of the cooperative group.

In an embodiment, the apparatus further includes a frame sending module.

The frame sending module is configured to, in a case where the third network device joins the cooperative group, send a first-type frame to a target network device, where the first-type frame includes group identifier information of the cooperative group.

The cooperative group interaction apparatus provided in this embodiment and the cooperative group interaction method provided in the preceding embodiments belong to the same concept. For technical details not described in detail in this embodiment, reference may be made to any one of the preceding embodiments, and this embodiment has the same beneficial effects as the cooperative group interaction method performed.

An embodiment of the present application further provides a network device. FIG. 11 is a schematic diagram of the hardware structure of a network device according to an embodiment. As shown in FIG. 11, the network device provided by the present application includes a processor 510 and a memory 520. One or more processors 510 may be provided in the network device, and one processor 510 is shown as an example in FIG. 11. The memory 520 is configured to store one or more programs. The one or more programs, when executed by the one or more processors 510, cause the one or more processors 510 to perform the cooperative group interaction method provided in the embodiments of the present application.

The network device further includes a communication apparatus 530, an input apparatus 540, and an output apparatus 550.

The processor 510, the memory 520, the communication apparatus 530, the input apparatus 540, and the output apparatus 550 in the network device may be connected through a bus or in other manners, and the connection through the bus is shown as an example in FIG. 11.

The input apparatus 540 may be configured to receive inputted digital or character information and generate key signal input related to user settings and function control of the network device. The output apparatus 550 may include a display device, such as a display screen.

The communication apparatus 530 may include a receiver and a sender. The communication apparatus 530 is configured to perform information transceiving communication under the control of the processor 510.

As a computer-readable storage medium, the memory 520 may be configured to store software programs, computer-executable programs, and modules, such as program instructions/modules corresponding to the cooperative group interaction method in the embodiments of the present application (for example, the interaction module 310, the generation module 320, and the sending module 330 in the cooperative group interaction apparatus). The memory 520 may include a program storage region and a data storage region. The program storage region may store an operating system and an application program required by at least one function. The data storage region may store data created according to the use of the network device. Additionally, the memory 520 may include a high-speed random-access memory and may further include a non-volatile memory such as at least one magnetic disk memory, a flash memory, or another non-volatile solid-state memory. In some examples, the memory 520 may further include memories remotely disposed relative to the processor 510, and these remote memories may be connected to the network device via a network. Examples of the network include, but are not limited to, the Internet, an intranet, a local area network, a mobile communication network, and a combination thereof.

An embodiment of the present application further provides a storage medium. The storage medium is configured to store a computer program which, when executed by a processor, causes the processor to perform the cooperative group interaction method provided in any embodiment of the present application. The method includes: a second network device is interacted with to form a cooperative group; in a case where the first network device is a master network device, cooperative group information is generated, where the cooperative group information includes multicast key information and group identifier information; and the cooperative group information is sent to the second network device.

Alternatively, the method includes: an information frame of a neighbor network device is received; a cooperative group is determined according to the information frame; and an authentication frame is sent to a network device in the cooperative group, where the authentication frame includes group identifier information of the cooperative group, and the authentication frame is used for requesting to join the cooperative group.

A computer storage medium according to an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. Concrete examples (a non-exhaustive list) of the computer-readable storage medium include an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disk read-only memory (CD-ROM), an optical memory, a magnetic memory, and any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by using any suitable medium, including, but not limited to, a radio medium, a wire, an optical cable, radio frequency (RF), and the like, or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" and similar programming languages. Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer via any type of network, including a local area network (LAN) or a wide area network (WAN) or may be connected to an external computer (for example, via the Internet provided by an Internet service provider).

Example embodiments of the present application are described above and are not intended to limit the scope of the present application.

It is to be understood by those skilled in the art that the term "user equipment" encompasses any suitable type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The example embodiments of the present application have been described in detail through exemplary and non-limiting examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1. A cooperative group interaction method, applied to a first network device and comprising:
interacting with a second network device to form a cooperative group;
in response to the first network device being a master network device, generating cooperative group information, wherein the cooperative group information comprises multicast key information and group identifier information; and
sending the cooperative group information to the second network device.

2. The method of claim 1, further comprising:
in response to the first network device being a slave network device, receiving cooperative group information sent by a master network device.

3. The method of claim 1 or 2, further comprising:
sending a first-type frame to a target network device, wherein the first-type frame comprises the group identifier information.

4. The method of claim 3, wherein the first-type frame comprises at least one of: a beacon frame, a probe response frame or an action frame.

5. The method of claim 3, wherein in response to the first network device joining a plurality of cooperative groups, the first-type frame comprises group identifier information corresponding to the plurality of cooperative groups.

6. The method of claim 1 or 2, wherein the cooperative group information further comprises at least one of: multicast key expiration time information or member master/slave role information.

7. The method of claim 1 or 2, wherein in response to no multicast key expiration time information being comprised in the cooperative group information, a multicast key is valid during an existence of the cooperative group.

8. The method of claim 1, wherein partial information of the cooperative group information is comprised in a physical frame header field of a cooperative frame or a medium access control (MAC) header field of a cooperative frame.

9. The method of claim 1, further comprising:
in response to the first network device being the master network device, encrypting a second-type frame according to the multicast key information; and
sending an encrypted second-type frame to a slave network device in the cooperative group, wherein the encrypted second-type frame carries the group identifier information, and the encrypted second-type frame is used for the slave network device to determine whether to respond to a cooperative operation.

10. The method of claim 9, wherein the second-type frame comprises at least one of: a trigger frame between network devices, a null data packet announcement (NDPA) frame or a measurement frame.

11. The method of claim 9, wherein not responding to the cooperative operation comprises at least one of:
discarding a cooperative frame corresponding to the second-type frame; or
entering a sleep mode within a set time period according to time information of a cooperative frame.

12. The method of claim 9, wherein responding to the cooperative operation comprises:
receiving a cooperative frame corresponding to the second-type frame;
decrypting the cooperative frame according to multicast key information corresponding to the cooperative frame; and
transmitting data on a corresponding channel resource indicated in the cooperative frame;
wherein the channel resource comprises at least one of: a time-division channel resource, a frequency-division channel resource or a spatial-division channel resource.

13. The method of claim 9, wherein in response to the first network device joining a plurality of cooperative groups, the second-type frame comprises one piece of specific group identifier information.

14. The method of claim 1, further comprising:
in response to the first network device being the master network device, sending at least one of new multicast key information or new group identifier information to a slave network device in the cooperative group through an encrypted broadcast frame or an encrypted unicast frame before the multicast key information expires, and setting a new expiration time.

15. The method of claim 1, further comprising:
in response to the first network device being the master network device, sending an indication frame to a neighbor network device, wherein the indication frame comprises the group identifier information, and the indication frame is used for indicating that the first network device exits from the cooperative group; and
locally deleting the cooperative group information.

16. The method of claim 15, wherein the indication frame is further used for indicating that the neighbor network device exits from the cooperative group and local cooperative group information is deleted.

17. The method of claim 2, further comprising:
in response to the first network device being a slave network device and receiving information that a neighbor network device joins or exits from the cooperative group through a unicast frame, sending group membership change information to a master network device of the cooperative group through a unicast frame.

18. The method of claim 2, further comprising:
in response to the first network device being a slave network device and receiving at least one of new multicast key information or new group identifier information, updating at least one of local multicast key information or local group identifier information.

19. A cooperative group interaction method, applied to a third network device and comprising:
receiving an information frame of a neighbor network device;
determining a cooperative group according to the information frame; and
sending an authentication frame to a network device in the cooperative group, wherein the authentication frame comprises group identifier information of the cooperative group, and the authentication frame is used for requesting to join the cooperative group.

20. The method of claim 19, wherein the information frame comprises at least one of:
a first-type frame sent by a master network device in the cooperative group; or
a second-type frame sent by a master network device in the cooperative group.

21. The method of claim 19, further comprising:
in response to successfully requesting to join the cooperative group, receiving cooperative group information sent by a master network device in the cooperative group, wherein the cooperative group information comprises multicast key information and group identifier information of the cooperative group.

22. The method of claim 19, further comprising:
in response to a third network joining the cooperative group, sending a first-type frame to a target network device, wherein the first-type frame comprises group identifier information of the cooperative group.

23. A network device, comprising a memory and at least one processor;
wherein the memory is configured to store at least one program; and
the at least one program, when executed by the at least one processor, causes the at least one processor to perform the cooperative group interaction method of any one of claims 1 to 22.

24. A computer-readable storage medium storing a computer program which, when executed by a processor, causes the processor to perform the cooperative group interaction method of any one of claims 1 to 22.
